# EUROPEAN PATENT APPLICATION

(11) **EP 4 679 170 A1**
(43) Date of publication of application: **14.01.2026**
(21) Application number: 25183140.0
(22) Date of filing: 16.06.2025
(51) Int. Cl.: G03B 15/05

(54) **PHOTOGRAPHY LIGHT ASSEMBLY**

(30) Priority: 12.07.2024 CN 202421670168 U
(71) Applicant: Shenzhen Leqi Innovation Co., Ltd., Shenzhen, Guangdong 518000 (CN)
(72) Inventor: QIN, Feng, Shenzhen (CN); YE, Xing, Shenzhen (CN)
(74) Representative: JD&P Patent Attorneys Joanna Dargiewicz & Partners

(57) **Abstract**

The present application provides a photography light assembly, comprising a light body and a power delivery module, wherein the power delivery module is provided with a first connecting component and a first connector, the light body is provided with a second connecting component and a second connector, the first connecting component and the second connecting component are detachably engaged, and the first connector is electrically connected to the second connector when the first connecting component is installed to the second connecting component. By incorporating detachable connection structures and connectors between the light body and the power delivery module, it allows the power delivery module to be installed to the light body while establishing an electrical connection. This enhances the integration of the light body and the power delivery module, achieving power supply for the light body, resulting in ease of operation, convenient storage, portability, and aesthetic appeal.

## Description

### TECHNICAL FIELD

The present application relates to the technical field of photography accessories, and more particularly to a photography light assembly.

### BACKGROUND

With the continuous development of film and television technology, the application of various photography accessories is becoming more and more widespread. For example, photography lights can significantly improve the shooting visual effect. Photography lights need to be equipped with a power adapter and connected to a power source through the power adapter to supply power to the photography lights. However, in existing technology, power is supplied to the photography light through power cords connected to the power adapter. Specifically, both ends of the power adapter are connected with power cords, one of which is connected to the photography light and the other to the power source. This results in a power cord dragging between the power adapter and the photography light during use, which easily causes tangled cords and inconvenience for storage, leading to a poor user experience.

### SUMMARY

In view of the above, the present application provides a photography light assembly that can effectively solve the above-mentioned problems.

The present application provides a photography light assembly, comprising a light body and a power delivery module, wherein the power delivery module is provided with a first connecting component and a first connector, the light body is provided with a second connecting component and a second connector, the first connecting component and the second connecting component are detachably engaged, and the first connector is electrically connected to the second connector when the first connecting component is installed to the second connecting component.

In one embodiment, the first connecting component and the second connecting component are engaged by interlocking, magnetic attraction, or adhesive bonding.

In one embodiment, the first connecting component comprises an interlocking block, the second connecting component comprises an interlocking seat and an interlocking groove defined on the interlocking seat, and the interlocking block and the interlocking groove are slidably interlocked to each other.

In one embodiment, the interlocking seat defines an installation direction, the interlocking groove extends along the installation direction, the width of the interlocking block gradually decreases along the installation direction, and the shape of the interlocking groove is adapted to the interlocking block;

and/or, the width of the interlocking block gradually increases in a direction away from the power delivery module, and the shape of the interlocking groove is adapted to the interlocking block.

In one embodiment, the second connecting component and the second connector are spaced apart in the installation direction, and a connecting end of the second connector is oriented toward a side of the second connecting component.

In one embodiment, the photography light assembly comprises a latching mechanism, and when the first connecting component is installed to the second connecting component, the latching mechanism is used to lock the power delivery module relative to the light body.

In one embodiment, the latching mechanism comprises a latching component arranged on the light body and a locking notch defined on the interlocking block, and the latching component comprises:

a button, movably arranged to the light body;

a pushing rod, with one end fixedly connected to the button;

a rotating component, rotatably arranged within the light body, with the other end of the pushing rod rotatably connected to one end of the rotating component;

a sliding rod, the other end of the rotating component being drivingly coupled with one end of the sliding rod, and the other end of the sliding rod being provided with a locking piece that is plug-in coupled with the locking notch.
a sliding slot, disposed on a side of the interlocking groove, the locking piece being slidably disposed in the sliding slot; and
an elastic component, arranged between the locking piece and an end wall of the sliding slot.

In one embodiment, the locking piece is movable between a locking position and an unlocking position, the locking piece protrudes into the interlocking groove and is inserted into the locking notch in the locking position, and the locking piece is disengaged from the locking notch and the interlocking groove in the unlocking position.

In one embodiment, the locking piece is movable between a locking position and an unlocking position, the locking piece protrudes into the interlocking groove and is inserted into the locking notch in the locking position, and the locking piece is disengaged from the locking notch and the interlocking groove in the unlocking position.

In one embodiment, the end of the rotating component away from the pushing rod is provided with a driving hole, and the end of the sliding rod away from the locking piece is provided with a driving wheel, the driving wheel being slidably arranged in the driving hole; and/or, the light body is provided with a supporting component, and the pushing rod is slidably supported on the supporting component;
and/or, the light body is provided with a rotating shaft, and the rotating component is rotatably connected to the rotating shaft.

In one embodiment, a groove is provided on one side of the power delivery module; the first connecting component is arranged at one end of the groove, the first connector is arranged at the other end of the groove, a connecting end of the first connector is arranged towards a side away from the first connecting component, both the second connecting component and the second connector are protrudingly arranged on a side wall of the light body; and/or, the power delivery module is provided with at least one of a power socket, a TYPE-C interface, and a D-TYPE output interface.

In one embodiment, the first connecting component and the second connecting component have matchable V-shape structures; and the power delivery module is a power adapter or a V-mount battery.

The present application provides a photography light assembly, comprising:
a light body; and
a power delivery module, detachably connected to the light body for supplying power to the light body;
wherein the power delivery module is provided with a first connecting component and a first connector, the light body is provided with a second connecting component and a second connector; when the power delivery module is installed to the light body, the first connecting component is engaged with and the second connecting component are engaged, and the first connector is electrically connected to the second connector in synchronization.

In one embodiment, wherein the first connecting component comprises an interlocking block, the second connecting component defines an interlocking groove, the interlocking groove is a wedge-shaped V-groove, and the interlocking block and the interlocking groove are slidably interlocked to each other.

In one embodiment, the interlocking groove extends along an installation direction, the width of the interlocking block and the width of the interlocking groove gradually decrease along the installation direction, and the shape of the interlocking groove is adapted to the interlocking block;
and/or, the width of the interlocking block gradually increases in a direction away from the power adapter, and the width of the interlocking groove gradually decreases in a direction away from the light body.

In one embodiment, the power delivery module is a power adapter or a V-mount battery.

In summary, the present application provides a photography light assembly, including a light body and a power delivery module. The power delivery module is provided with a first connecting component and a first connector, and the light body is provided with a second connecting component and a second connector. The first connecting component and the second connecting component are detachably coupled and configured such that the first connector is conductively connected to the second connector when the first connecting component is installed to the second connecting component. The present application, by providing a detachable connection structure and connectors between the light body and the power delivery module, allows the power delivery module to be conductively connected to the light body while being mounted on it. This enhances the integration of the light body and the power adapter, achieving portable power supply for the light body, resulting in ease of operation, convenient storage, portability, and aesthetic appeal, thereby providing users with a good product experience.

### BRIEF DESCRIPTION OF THE DRAWINGS

FIG. 1 is a stereoscopic schematic diagram of an unassembled photography light assembly according to an embodiment of the present application;
FIG. 2 is a stereoscopic schematic diagram of a light body in FIG. 1;
FIG. 3 is an exploded schematic diagram of the light body in FIG. 2 with part of a shell hidden;
FIG. 4 is a stereoscopic schematic diagram of an assembled photography light assembly according to another embodiment of the present application; and
FIG. 5 is a stereoscopic schematic diagram of the assembled photography light assembly in FIG. 4.

### DESCRIPTION OF THE EMBODIMENTS

Before describing the embodiments in detail, it should be understood that the present application is not limited to the detailed structure or component arrangement described below or in the accompanying drawings. The present application may be embodied in other ways. Moreover, it should be understood that the wording and terminology used herein are for descriptive purposes only and should not be interpreted as limiting. As used herein, similar terms such as "including", "comprising", and "having" are meant to encompass the items listed thereafter, their equivalents, and other additional items. In particular, when describing "an element", this application does not limit the number of elements to one, and may include multiple elements.

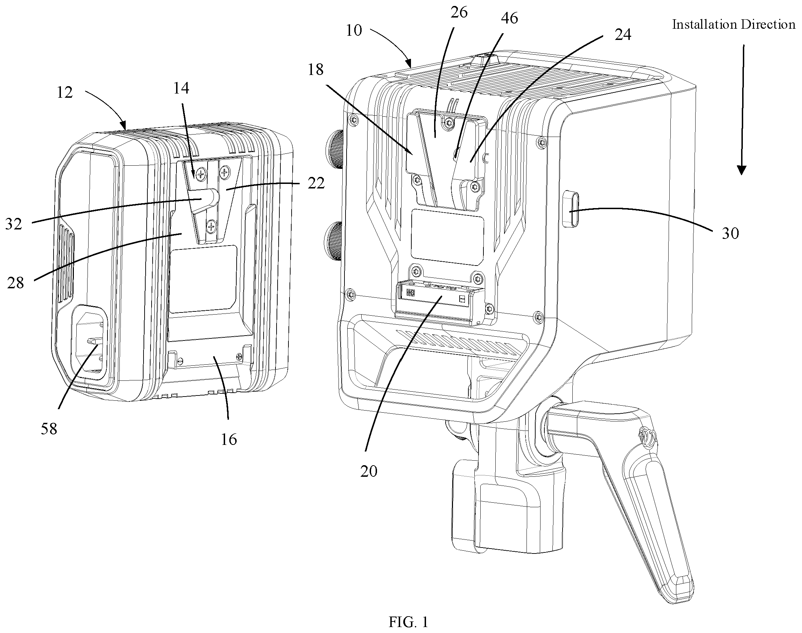

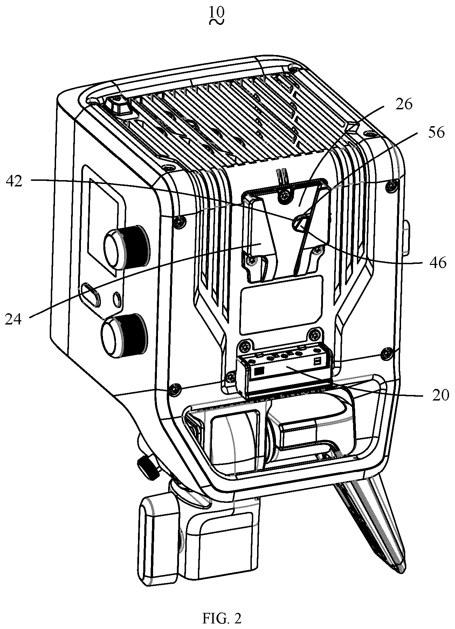

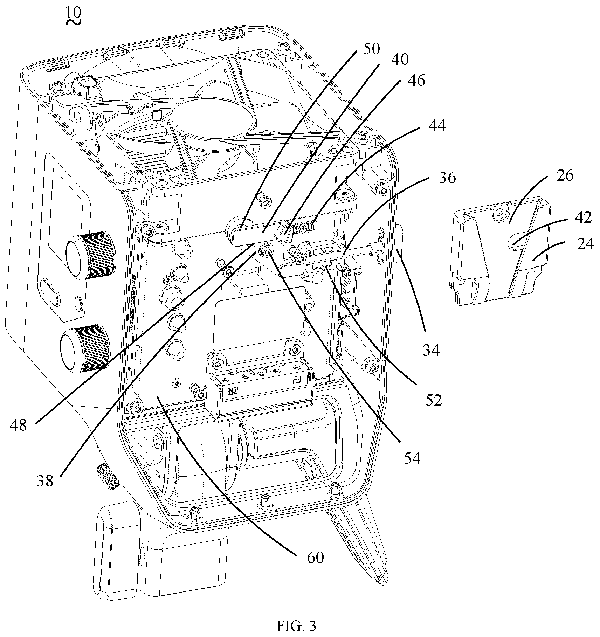

Referring to FIGS. 1-3, the present application provides a photography light assembly for photography accessories. The photography light assembly comprises a light body 10 (e.g., a COB photography light, a Chip-On-Board photography light) and a power adapter 12. The power adapter 12 is equipped with a first connecting component 14 and a first connector 16. The light body 10 is equipped with a second connecting component 18 and a second connector 20. The first connecting component 14 can be detachably engaged with the second connecting component 18. When the first connecting component 14 is installed to the second connecting component 18, the first connector 16 conductively connects to the second connector 20, establishing an electrical connection between the light body 10 and the power adapter 12. The present application provides a detachable connection structure and an electrical connector between the light body 10 and the power adapter 12, so that the power adapter 12 is conductively connected while being installed on the light body 10, enhancing the integration of the light body 10 and the power adapter 12, realizing portable power supply for the light body 10, achieving the purpose of simple operation, easy storage, portability, and aesthetics, and bringing a good product experience to users.

The first connecting component 14 and the second connecting component 18 can be detachably engaged by interlocking, magnetic attraction, or adhesive bonding. In this embodiment, the first connecting component 14 and the second connecting component 18 are detachably engaged by interlocking.

Specifically, the first connecting component 14 has an interlocking block 22, and the second connecting component 18 has an interlocking seat 24 with an interlocking groove 26. The interlocking block 22 and the interlocking groove 26 are slidably interlocked to each other. In the illustrated embodiment, the interlocking groove 26 runs through in the vertical direction. The interlocking seat 24 defines an installation direction, which is vertically downwards as shown, and the interlocking groove 26 extends along the installation direction. Preferably, the width of the interlocking block 22 gradually decreases along the installation direction, and the shape of the interlocking groove 26 is adapted to the interlocking block 22, for example, the interlocking block 22 has an inverted trapezoidal shape. Further, the width of the interlocking block 22 gradually increases in a direction away from the power adapter 12, that is, the opposite side walls of the interlocking block 22 in its width direction are inclined structures, and the shape of the interlocking groove 26 is adapted to the interlocking block 22, so that when the interlocking block 22 is slidably engaged into the interlocking groove 26, the limiting effect of the inclined structures can realize the limitation of the interlocking block 22 in a thickness direction, preventing the interlocking block 22 from detaching from the interlocking seat 24.

In the illustrated embodiment, the second connecting component 18 and the second connector 20 are spaced apart in the installation direction, for example, the second connecting component 18 is located above the second connector 20. Correspondingly, the first connecting component 14 and the first connector 16 are spaced apart in the installation direction, with the first connecting component 14 positioned above the first connector 16. The first connector 16 and the second connector 20 are, for instance, BP connectors, and can be conductively connected via a plug-in/plug-out type conduction or a contact-type connection. In this embodiment, a connecting end of the first connector 16 is arranged away from the first connecting component 14, that is, arranged downwards; and a connecting end of the second connector 20 is arranged towards the second connecting component 18, that is, arranged upwards. When the interlocking block 22 slides downwards into the interlocking groove 26 along the installation direction, the downward connecting end of the first connector 16 engages with the upward connecting end of the second connector 20, thereby realizing the conductive connection between the first connector 16 and the second connector 20, and finally realizing the electrical connection between the light body 10 and the power adapter 12.

Furthermore, one side of the power adapter 12 features a groove 28 that extends in the vertical direction. An upper end of the groove 28 holds the first connecting component 14, while a lower end accommodates the first connector 16. Both the second connecting component 18 and the second connector 20 are protrudingly arranged on a side wall of the light body 10. With the arrangement, when the power adapter 12 is installed on the side of the light body 10, a main body of the power adapter 12 sits close to or abuts against the light body 10. The power adapter 12 and the light body 10 appear as an integrated structure, enhancing the integration of the light body 10 and the power adapter 12, and eliminating the trouble of the user having to additionally mount the power adapter 12 after the two are electrically connected in the prior art.

In the illustrated embodiment, the photography light assembly further includes a latching mechanism, which is used to lock the power adapter 12 relative to the light body 10 when the first connecting component 14 is installed to the second connecting component 18. The latching mechanism comprises a latching component 30 on the light body 10 and a locking notch 32 on the interlocking block 22. The locking notch 32 is a side-opening structure on a side of the interlocking block 22, and both the latching component 30 and the locking notch 32 are oriented in the width direction. Specifically, the latching component 30 includes a button 34, a pushing rod 36, a rotating component 38, a sliding rod 40, a sliding slot 42, and an elastic component 44. The button 34 is movably arranged on the light body 10, and at least a portion of the button 34 protrudes out of the light body 10 for the user to press. For example, the button 34 is arranged on the light body 10 on a side adjacent to the side where the interlocking seat 24 is located. The pushing rod 36 is located inside the light body 10, and one end of the pushing rod 36 is fixedly connected to the button 34, and the other end is rotatably connected to an end of the rotating component 38. The rotating component 38 is rotatably arranged inside the light body 10, and the other end of the rotating component 38 is drivingly coupled to one end of the sliding rod 40. The sliding rod 40 is located inside the light body 10, and the other end of the sliding rod 40 is provided with a locking piece 46 that is plug-in coupled with the locking notch 32. The sliding slot 42 is arranged on a side of the interlocking groove 26, and the sliding slot 42 penetrates a bottom wall and a side wall of the interlocking groove 26. The locking piece 46 is slidably arranged in the sliding slot 42, and the elastic component 44 is arranged between the locking piece 46 and an end wall of the sliding slot 42.

More specifically, the locking piece 46 can move laterally between a locking position and an unlocking position. In the locking position, the locking piece 46 protrudes into the interlocking groove 26 and is inserted into the locking slot 32, thereby locking the interlocking block 22, fixing the power adapter 12 to the light body 10, and restricting movement of the interlocking block 22 and power adapter 12 in the vertical direction and the thickness direction. In the unlocking position, the locking block 46 disengages from the locking slot 32 and the interlocking groove 26, thereby releasing the interlocking block 22 to allow the interlocking block 22 and the power adapter 12 to move upward relative to the light body 10 and disengage from the light body 10. An end of the rotating component 38 away from the pushing rod 36 is provided with a driving hole 48, an extending direction of the driving hole 48 forms an angle with an extending direction of the sliding rod 40, the sliding rod 40 is arranged in a horizontal direction, and the driving hole 48 is arranged obliquely downward. Specifically, the end of the sliding rod 40 away from the locking piece 46 is provided with a driving wheel 50, and the driving wheel 50 is slidably arranged in the driving hole 48. The light body 10 is provided with a supporting component 52 and a rotating shaft 54. The supporting component 52 and the rotating shaft 54 are fixed in the light body 10, for example, fixedly connected to an inner wall of a shell of the light body 10. The pushing rod 36 is slidably supported on the supporting component 52, the rotating shaft 54 is located between the two ends of the rotating component 38, and the rotating component 38 is rotatably sleeved on the rotating shaft 54. The light body 10 is provided with a circuit board 60 therein, the second connector 20 is electrically connected to the circuit board 60, and the power adapter 12 is provided with a circuit board (not shown), and the first connector 16 is electrically connected to the circuit board.

Preferably, a side of the locking piece 46 toward the interlocking groove 26 is provided with a driving chamfer 56, which cooperates with the interlocking block 22. Specifically, the locking piece 46 protrudes into the interlocking groove 26 in a normal state. When installing the power adapter 12 onto the light body 10, the power adapter 12 is first placed close to the light body 10, so that the first connecting component 14, the second connecting component 18, the first connector 16, and the second connector 20 are sequentially arranged in the vertical direction, and the interlocking block 22 is aligned with the interlocking groove 26. Then, the power adapter 12 is moved downward, so that the interlocking block 22 snaps into the interlocking groove 26. During the downward movement, the interlocking block 22 abuts against the locking piece 46. The locking piece 46 moves to the right against the elastic force of the elastic component 44 under the squeezing and pushing action of a side wall of the interlocking block 22 until it exits the interlocking groove 26, realizing the movement from the locking position to the unlocking position. The interlocking block 22 continues to move downward until the locking notch 32 corresponds to the position of the locking piece 46. After the locking piece 46 loses the squeezing action of the interlocking block 22, it moves to the left under the elastic force of the elastic component 44 and snaps into the locking notch 32. The locking piece 46 moves from the unlocking position to the locking position. At this time, the first connector 16 and the second connector 20 are plugged in to achieve electrical conduction, thereby realizing the locking and electrical connection of the power adapter 12 relative to the light body 10. When it is necessary to remove the power adapter 12 from the light body 10, the button 34 is pressed, and the button 34 drives the rotating component 38 to rotate clockwise through the pushing rod 36. The rotation of the rotating component 38 drives the driving wheel 50 to move to the right through the driving hole 48. The driving wheel 50 drives the locking piece 46 to move to the right through the sliding rod 40 to exit the locking notch 32 and the interlocking groove 26. The locking piece 46 moves from the locking position to the unlocking position, releasing the locking of the power adapter 12. At this time, the power adapter 12 can be moved upward until the interlocking block 22 disengages from the interlocking groove 26, realizing the removal of the power adapter 12 from the light body 12. At this time, the first connector 16 and the second connector 20 are disconnected. After releasing the button 34, the locking piece 46 moves to the left to the locking position under the elastic force of the elastic component 44, and the other components reset.

In the illustrated embodiment, the power adapter 12 can be equipped with a power socket 58, a TYPE-C interface, and a D-TYPE output interface. The power socket 58 is used to connect to an external power source, and the power adapter 12 can be designed with a wide voltage input range to accommodate different municipal power voltages worldwide. By providing a TYPE-C interface, the power adapter 12 can be compatible with PD3.1 and lower protocols, and by providing a D-TYPE output interface, the power adapter 12 can meet the professional interface requirements of the industry, thereby expanding the application range of the power adapter 12, and enhancing the functionality of the power adapter 12.

V-mount batteries are rechargeable batteries widely used in professional filmmaking, broadcasting, and lighting equipment. Key feature of a V-mount battery is the V-mount interface structure. A V-mount battery features a wedge-shaped V-groove that slides onto matching rails on devices, with a spring-loaded latch enabling "push-lock" installation and quick release, and an internal mechanical locking mechanism that secures the battery against vibrations.

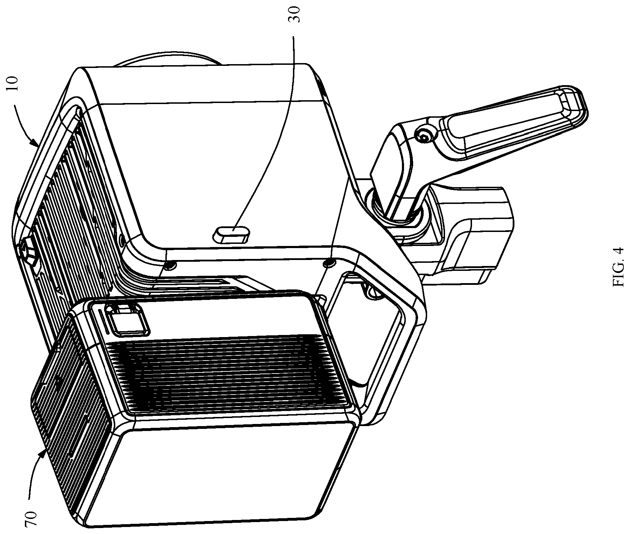

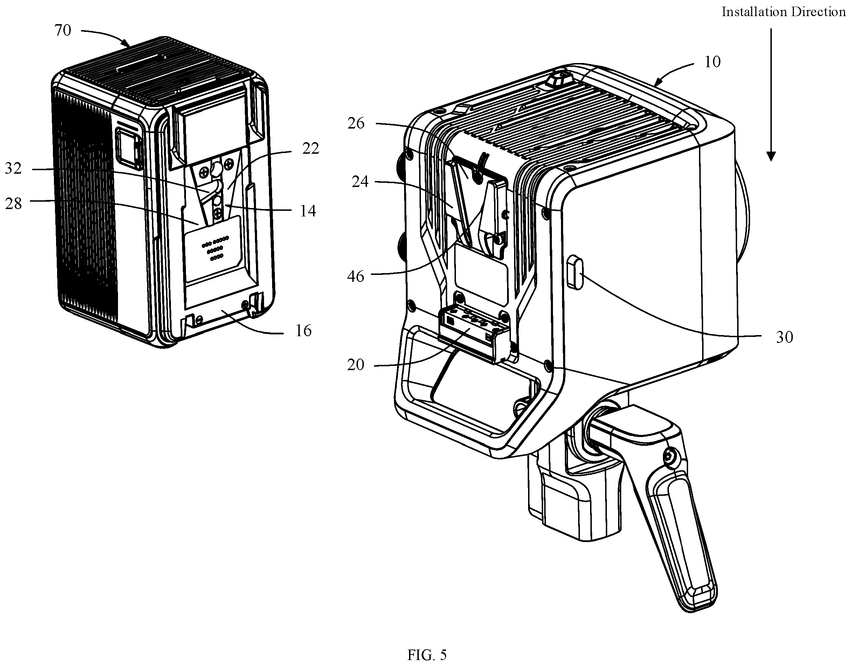

Referring to FIG. 4 and FIG. 5, the present application provides a photography light assembly for photography accessories. The photography light assembly comprises the light body 10 and a V-mount battery 70. The V-mount battery 70 is equipped with the first connecting component 14 and the first connector 16. The light body 10 is equipped with a second connecting component 18 and a second connector 20. The first connecting component 14 can be detachably engaged with the second connecting component 18. When the first connecting component 14 is installed to the second connecting component 18, the first connector 16 conductively connects to the second connector 20, establishing an electrical connection between the light body 10 and the V-mount battery 70. The present application provides a detachable connection structure and an electrical connector between the light body 10 and the V-mount battery 70, so that the V-mount battery 70 is conductively connected while being installed on the light body 10, enhancing the integration of the light body 10 and the V-mount battery 70, realizing portable power supply for the light body 10, achieving the purpose of simple operation, easy storage, portability, and aesthetics, and bringing a good product experience to users.

As shown in FIG. 5, the first connecting component 14 and the second connecting component 15 have matchable V-shape structures, and the first connecting component 14 and the second connecting component 18 are detachably engaged by interlocking. The interlocking block 22 is in V shape, and the width of the interlocking block 22 gradually decreases along the installation direction. The interlocking groove 26 is a wedge-shaped V-groove.

Specifically, the first connecting component 14 has the interlocking block 22, which is slidably interlocked to the interlocking groove 26. The groove 28 that extends extending in the vertical direction is defined in the V-mount battery 70. The upper end of the groove 28 holds the first connecting component 14, while the lower end accommodates the first connector 16. The locking notch 32 with a side-opening structure is defined on a side of the interlocking block 22.

When installing the V-mount battery 70 onto the light body 10, the V-mount battery 70 is first placed close to the light body 10, so that the first connecting component 14, the second connecting component 18, the first connector 16, and the second connector 20 are sequentially arranged in the vertical direction, and the interlocking block 22 is aligned with the interlocking groove 26. Then, V-mount battery 70 is moved downward, so that the interlocking block 22 snaps into the interlocking groove 26. During the downward movement, the interlocking block 22 abuts against the locking piece 46. The locking piece 46 moves to the right against the elastic force of the elastic component 44 under the squeezing and pushing action of the interlocking block 22 until it exits the interlocking groove 26, realizing the movement from the locking position to the unlocking position. The interlocking block 22 continues to move downward until the locking notch 32 corresponds to the position of the locking piece 46. After the locking piece 46 loses the squeezing action of the interlocking block 22, it moves to the left under the elastic force of the elastic component 44 and snaps into the locking notch 32. The locking piece 46 moves from the unlocking position to the locking position. At this time, the first connector 16 and the second connector 20 are plugged in to achieve electrical conduction, thereby realizing the locking and electrical connection of the power adapter 12 relative to the light body 10.

When removing the V-mount battery 70 from the light body 10, the button 34 is pressed, and the button 34 drives the rotating component 38 to rotate clockwise through the pushing rod 36. The rotation of the rotating component 38 drives the driving wheel 50 to move to the right through the driving hole 48. The driving wheel 50 drives the locking piece 46 to move to the right through the sliding rod 40 to exit the locking notch 32 and the interlocking groove 26. The locking piece 46 moves from the locking position to the unlocking position, releasing the locking of the V-mount battery 70. At this time, the V-mount battery 70 can be moved upward until the interlocking block 22 disengages from the interlocking groove 26, realizing the removal of the V-mount battery 70 from the light body 12. At this time, the first connector 16 and the second connector 20 are disconnected. After releasing the button 34, the locking piece 46 moves to the left to the locking position under the elastic force of the elastic component 44, and the other components reset.In summary, the present application provides a photography light assembly, including a light body and a power delivery module, including but not being limited to a power adapter and a battery. The power delivery module is provided with a first connecting component and a first connector, and the light body is provided with a second connecting component and a second connector. The first connecting component and the second connecting component are detachably engaged such that the first connector is conductively connected to the second connector when the first connecting component is installed to the second connecting component. The present application, by incorporating detachable connection structures and connectors between the light body and the power delivery module, allows the power delivery module to be installed to the light body while establishing an electrical connection. This enhances the integration of the light body and the power delivery module, achieving portable power supply for the light body, resulting in ease of operation, convenient storage, portability, and aesthetic appeal, thereby providing users with an excellent product experience.

The foregoing descriptions are merely partial or preferred embodiments of the present invention. Neither the text nor the drawings shall be construed to limit the scope of protection of the present invention. Any equivalent structural changes made based on the contents of the specification and drawings of the present invention under the concept of the present invention as a whole, or direct or indirect application in other related technical fields, shall be included in the scope of the present invention.

## Claims

1. A photography light assembly, comprising a light body and a power delivery module, **characterized in that** the power delivery module is provided with a first connecting component and a first connector, the light body is provided with a second connecting component and a second connector, the first connecting component and the second connecting component are detachably engaged, and the first connector is electrically connected to the second connector when the first connecting component is installed to the second connecting component.

2. The photography light assembly according to claim 1, **characterized in that** the first connecting component and the second connecting component are engaged by interlocking, magnetic attraction, or adhesive bonding.

3. The photography light assembly according to claim 1, **characterized in that** the first connecting component comprises an interlocking block, the second connecting component comprises an interlocking seat and an interlocking groove defined on the interlocking seat, and the interlocking block and the interlocking groove are slidably interlocking to each other.

4. The photography light assembly according to claim 3, **characterized in that** the interlocking seat defines an installation direction, the interlocking groove extends along the installation direction, the width of the interlocking block gradually decreases along the installation direction, and the shape of the interlocking groove is adapted to the interlocking block;
and/or, the width of the interlocking block gradually increases in a direction away from the power delivery module, and the shape of the interlocking groove is adapted to the interlocking block.

5. The photography light assembly according to claim 4, **characterized in that** the second connecting component and the second connector are spaced apart in the installation direction, and a connecting end of the second connector is oriented toward a side of the second connecting component.

6. The photography light assembly according to any one of claims 1-5, **characterized in that** the photography light assembly comprises a latching mechanism, and when the first connecting component is installed to the second connecting component, the latching mechanism is used to lock the power delivery module relative to the light body.

7. The photography light assembly according to claim 6, **characterized in that** the latching mechanism comprises a latching component arranged on the light body and a locking notch defined on the interlocking block, and the latching component comprises:
a button, movably arranged to the light body;
a pushing rod, with one end fixedly connected to the button;
a rotating component, rotatably arranged within the light body, with the other end of the pushing rod rotatably connected to one end of the rotating component;
a sliding rod, the other end of the rotating component being drivingly coupled with one end of the sliding rod, and the other end of the sliding rod being provided with a locking piece that is plug-in coupled with the locking notch.
a sliding slot, disposed on a side of the interlocking groove, the locking piece being slidably disposed in the sliding slot; and
an elastic component, arranged between the locking piece and an end wall of the sliding slot.

8. The photography light assembly according to claim 7, **characterized in that** the locking piece is movable between a locking position and an unlocking position, the locking piece protrudes into the interlocking groove and is inserted into the locking notch in the locking position, and the locking piece is disengaged from the locking notch and the interlocking groove in the unlocking position.

9. The photography light assembly according to claim 7, **characterized in that** the end of the rotating component away from the pushing rod is provided with a driving hole, and the end of the sliding rod away from the locking piece is provided with a driving wheel, the driving wheel being slidably arranged in the driving hole; and/or, the light body is provided with a supporting component, and the pushing rod is slidably supported on the supporting component; and/or, the light body is provided with a rotating shaft, and the rotating component is rotatably connected to the rotating shaft.

10. The photography light assembly according to claim 1, **characterized in that** a groove is provided on one side of the power delivery module; the first connecting component is arranged at one end of the groove, the first connector is arranged at the other end of the groove, a connecting end of the first connector is arranged towards a side away from the first connecting component, both the second connecting component and the second connector are protrudingly arranged on a side wall of the light body; and/or, the power delivery module is provided with at least one of a power socket, a TYPE-C interface, and a D-TYPE output interface.

11. The photography light assembly according to any one of claims 1-11, **characterized in that** the first connecting component and the second connecting component have matchable V-shape structures; and the power delivery module is a power adapter or a V-mount battery.

12. A photography light assembly, comprising:
a light body; and
a power delivery module, detachably connected to the light body for supplying power to the light body;
**characterized in that** the power delivery module is provided with a first connecting component and a first connector, the light body is provided with a second connecting component and a second connector; when the power delivery module is installed to the light body, the first connecting component is engaged with and the second connecting component are engaged, and the first connector is electrically connected to the second connector in synchronization.

13. The photography light assembly according to claim 12, wherein the first connecting component comprises an interlocking block, the second connecting component defines an interlocking groove, the interlocking groove is a wedge-shaped V-groove, and the interlocking block and the interlocking groove are slidably interlocked to each other.

14. The photography light assembly according to claim 13, wherein the interlocking groove extends along an installation direction, the width of the interlocking block and the width of the interlocking groove gradually decrease along the installation direction, and the shape of the interlocking groove is adapted to the interlocking block;
and/or, the width of the interlocking block gradually increases in a direction away from the power delivery module, and the width of the interlocking groove gradually decreases in a direction away from the light body.

15. The photography light assembly according to any one of claims 12-14, wherein the power delivery module is a power adapter or a V-mount battery.
